# FASCICULE DE BREVET EUROPEEN

(11) **EP 0 342 117 B1**
(45) Date de publication et mention de la délivrance du brevet: **01.09.1993**
(21) Numéro de dépôt: 89401282.2
(22) Date de dépôt: 09.05.1989
(51) Int. Cl.: H04N 5/64

(54) **Installation sonore, en particulier stéréophonique pour téléviseurs à haut-parleur intégré de fréquences basses de grandes dimensions**
Tonanlage, besonders zur stereophonen Tonwiedergabe in einem Fernsehempfangsgerät mit integriertem Tieftonlautsprecher grosser Dimensionen
Sound system, in particular a stereophonic one, for television receivers with an integrated large-sized woofer

(30) Priorité: 06.05.1988 FR 8806116
(43) Date de publication de la demande: 15.11.1989
(73) Titulaire: SOCIETE ELECTRONIQUE DE LA REGION PAYS DE LOIRE, F-75020 Paris (FR)
(72) Inventeur: Chatelain, Jean-Yves, Cédex 67 F-92045 Paris la Défense (FR)
(74) Mandataire: Grynwald, Albert

(56) Documents cités:
- EP-A- 0 117 487
- EP-A- 0 125 625
- EP-A- 0 154 219
- FR-A- 1 007 058
- US-A- 3 086 078
- US-A- 3 523 589
- US-A- 4 128 738

## Description

La présente invention se rapporte à une installation sonore, en particulier stéréophonique pour téléviseurs à haut-parleur intégré de fréquences basses de grandes dimensions.

Les considérations esthétiques actuelles en matière de téléviseurs, en particulier de téléviseurs à écrans presque plats de grande dimensions imposent des coffrets présentant, de chaque côté du tube cathodique des "colonnes sonores" de très faible largeur. Or, on sait que pour reproduire correctement les fréquences basses du spectre sonore, il faut utiliser des haut-parleurs de grandes dimensions, de préférence des haut-parleurs circulaires ou elliptiques. De tels haut-parleurs ne peuvent être logés dans ces colonnes sonores étroites. On résout actuellement le problème soit en utilisant des haut-parleurs de basses trop petits ou de forme très allongée, soit en branchant des haut-parleurs extérieurs disposés dans des baffles indépendants du téléviseur. Pour une reproduction stéréophonique, il faut donc utiliser deux tels baffles.

On connaît d'après le document EP-A-0 117 487 une installation sonore pour téléviseur, comportant un haut-parleur de basses logé dans une enceinte acoustique, mais cette enceinte débouche vers l'arrière du téléviseur.

La présente invention a pour objet une installation sonore, en particulier une installation sonore stéréophonique pour téléviseur, utilisant un haut-parleur de reproduction des fréquences basses de grandes dimensions, qui soit disposé dans le coffret du téléviseur.

L'installation sonore conforme à l'invention comporte, outre les haut-parleurs de reproduction des fréquences élevées du spectre sonore normalement fixés sur la façade du téléviseur, au moins un haut-parleur de reproduction des fréquences basses disposé dans le coffret du téléviseur, à sa partie arrière et associé à une enceinte distincte du coffret et débouchant d'un côté de la façade du téléviseur, la partie antérieure de cette enceinte étant beaucoup plus étroite que sa partie postérieure. De préférence, cette enceinte est garnie de produit absorbant sonore tel que de la laine de verre. De façon avantageuse, on garnit de produit absorbant sonore le cache arrière et les faces intérieures du coffret non occupées par l'enceinte.

La présente invention sera mieux comprise à la lecture de la description détaillée de deux modes de réalisation, pris comme exemples non limitatifs et illustrés par le dessin annexé, sur lequel :
- la figure 1 est une vue avant d'un téléviseur conforme à l'invention, sans les grilles-décor de façade,
- la figure 2 est une vue de dessus en coupe selon II-II de la figure 1, et
- la figure 3 est une vue analogue à celle de la figure 2 d'un autre mode de réalisation d'un téléviseur conforme à l'invention.

Le téléviseur représenté sur le dessin est du type à coffret comportant, sur la façade 1 deux "colonnes sonores" 2,3, s'étendant sur toute la hauteur de la façade et sur une largeur réduite d'environ 10 cm. Dans les téléviseurs actuels de type connu, la façade comporte, pour chaque colonne sonore, une découpe pour un haut-parleur de reproduction des fréquences aiguës (connu sous le nom de "tweeter") et un haut-parleur pour la reproduction des fréquences basses et des fréquences médium du spectre sonore. Du fait de la très faible largeur des colonnes, le haut-parleur de basses et médium ne peut être que de qualité médiocre.

L'installation sonore de l'invention comporte un haut-parleur 4 de grandes dimensions (par exemple d'un diamètre d'au moins 10 cm) capable de reproduire correctement en particulier les fréquences basses du spectre sonore (à partir d'environ 30 Hz). Ce haut-parleur 4 est fixé dans la partie arrière du coffret 5 du téléviseur.

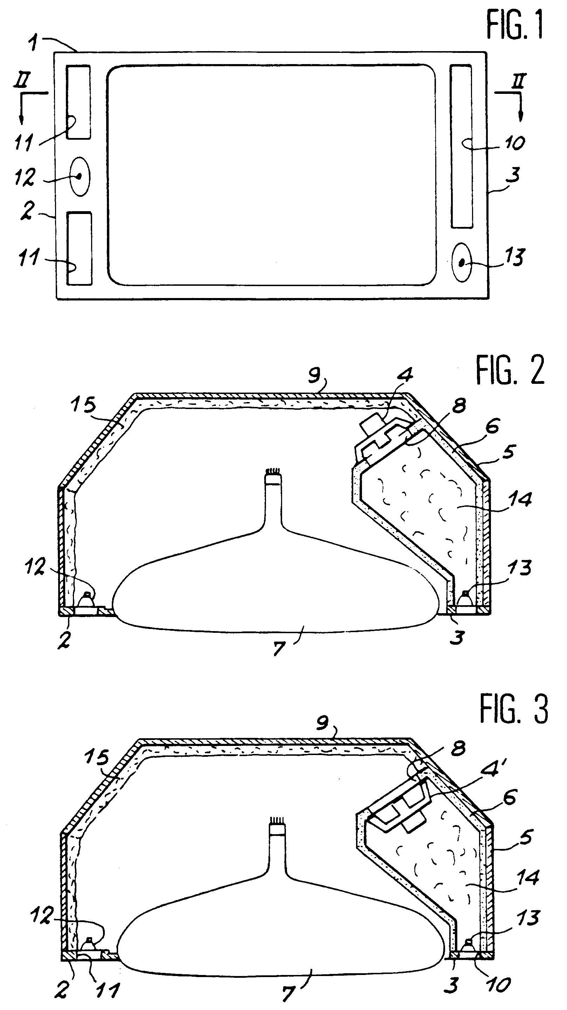

Selon le mode de réalisation représenté en figure 2, le haut-parleur 4 est fixé à l'arrière d'une enceinte sonore 6, à peu près à mi-hauteur du téléviseur. Cette enceinte 6 est réalisée en un matériau couramment utilisé pour réaliser des enceintes sonores, tel que de l'aggloméré de particules de bois ou du plastique chargé, d'épaisseur appropriée (au moins environ 10 mm d'épaisseur). L'enceinte 6 s'étend sur presque toute la hauteur du coffret du téléviseur. Sa forme est adaptée à l'espace subsistant entre le tube cathodique 7 et l'une des parois du coffret 5. Sur le dessin, l'enceinte est disposée dans la partie droite du coffret, mais il est bien entendu qu'elle pourrait l'être aussi bien dans la partie gauche.

A la partie antérieure du coffret 5, l'enceinte 6 a une largeur faible déterminée par la largeur des colonnes sonores 2 ou 3, par contre, à l'arrière, l'enceinte 6 s'étend sur presque la moitié de la largeur de la partie arrière du coffret. Entre l'avant et arrière, le profil de l'enceinte 6 est déterminé par la forme du coffret 5 et du tube cathodique 7. Il est préférable que du côté du coffret le profil de l'enceinte épouse celui du coffret, tandis que du côté du tube cathodique, il soit distant de celui-ci de plusieurs centimètres afin de ne pas le toucher, compte tenu des tolérances de fabrication et de positionnement du tube.

La face arrière 8 de l'enceinte peut être parallèle au cache arrière 9 et en être située à une distance suffisante pour loger le haut-parleur 4 et pour laisser passer ses ondes sonores, ce haut-parleur étant fixé sur cette face 8. Selon le mode de réalisation représenté sur le dessin, la face 8 de l'enceinte fait un angle de 20 à 30° environ par rapport au cache 9.

Selon le mode de réalisation de la figure 2, le haut-parleur 4 est fixé sur la face 8, à l'extérieur de l'enceinte, devant une découpe correspondante de cette face 8. L'onde avant du haut-parleur 4 passe donc dans l'enceinte 6 et en sort par l'ouverture 10 pratiquée dans la façade 1 du côté de la colonne 3. L'onde arrière du haut-parleur 4 se dirige vers l'ouverture 11 pratiquée dans la façade 1, du côté de la colonne 2, en contournant le tube 7.

Les haut-parleurs d'aiguës gauche 12 et droit 13, du fait qu'ils sont de petites dimensions, sont directement fixés sur la face arrière de la façade 1, dans les colonnes 2 et 3. Ils peuvent soit être fixés tous deux en bas de ces colonnes comme représenté sur la partie de droite de la figure 1 (ou en haut, selon un mode de réalisation non représenté), soit au milieu de ces colonnes comme représenté sur la partie de gauche de la figure 1. Dans le premier cas, les ouvertures 10,11 de passage des ondes avant et arrière du haut-parleur 4 sont des ouvertures rectangulaires uniques pour chaque colonne, s'étendant sur toute la hauteur disponible au-dessus du haut-parleur d'aiguës correspondant. Dans le second cas, les ouvertures 10,11 sont rectangulaires, mais en deux parties s'étendant au-dessus et au-dessous du haut-parleur d'aiguës correspondant.

Le mode de réalisation de la figure 3 est similaire à celui de la figure 2, la seule différence étant que le haut-parleur de basses 4′ est fixé sur la cloison 8 de l'enceinte 6, à l'intérieur de cette enceinte.

Pour améliorer les qualités acoustiques du dispositif de l'invention, on remplit l'enceinte 6 de matériau 14 acoustiquement absorbant, tel que de la laine de verre. De façon avantageuse, on fixe un tel matériau absorbant 15 sur le cache arrière 9 et les faces intérieures du coffret 5.

Le dispositif de l'invention permet d'obtenir un effet stéréophonique avec un seul haut-parleur de basses et deux haut-parleurs d'aiguës, car les fréquences basses du spectre sonore sont très peu directives (il est difficile de localiser exactement leur source) et n'interviennent pratiquement pas dans l'effet stéréophonique qui est essentiellement dû aux haut-parleurs d'aiguës. De façon avantageuse, si l'on dispose de vraies sources stéréophoniques, on peut utiliser en tant que haut-parleur 4 un haut-parleur à double bobine.

L'invention a été décrite ci-dessus en référence à une installation à un seul haut-parleur de basses, mais il est bien entendu que l'on pourrait en utiliser un deuxième, fixé sur une enceinte similaire à l'enceinte 6, symétriquement par rapport à l'axe du tube 7.

## Revendications

1. Installation sonore, pour téléviseur à haut-parleur de fréquences basses intégré de grandes dimensions, comportant en outre des haut-parleurs de fréquences aiguës fixés sur la façade du téléviseur, caractérisée par le fait qu'elle comporte au moins un haut-parleur de reproduction des fréquences basses (4) disposé dans le coffret du téléviseur, à sa partie arrière, et associé à une enceinte (6) distincte du coffret et débouchant d'un côté (10) de la façade du téléviseur, la partie antérieure de cette enceinte étant beaucoup plus étroite que sa partie postérieure.

2. Installation sonore selon la revendication 1, pour une reproduction sonore stéréophonique, caractérisée par le fait qu'elle comporte une deuxième enceinte associée à un haut-parleur de fréquences basses et fixée symétriquement par rapport à la première enceinte.

3. Installation sonore selon la revendication 1 ou 2, caractérisée par le fait que l'enceinte est garnie de matériau absorbant sonore (14).

4. Installation sonore selon l'une des revendications précédentes, caractérisée par le fait que le cache arrière (9) et les faces intérieures du coffret non occupées par l'enceinte sont garnis de matériau absorbant sonore.

## Claims

1. Sound installation, for a television with an integrated low-frequency loudspeaker of large dimensions, also including high-frequency loudspeakers fixed to the front panel of the television, characterised in that it includes at least one loudspeaker (4) for reproducing the low frequencies, which is placed in the cabinet of the television, at its rear part, and associated with an enclosure (6) separate from the cabinet and opening out on one side (10) of the front panel of the television, the front part of this enclosure being much narrower than its rear part.

2. Sound installation according to Claim 1, for stereophonic sound reproduction, characterised in that it includes a second enclosure associated with a low-frequency loudspeaker and fixed symmetrically with respect to the first enclosure.

3. Sound installation according to either of Claims 1 and 2, characterised in that the enclosure is lined with sound-absorbing material (14).

4. Sound installation according to one of the preceding claims, characterised in that the rear cover (9) and the inner surfaces of the cabinet which are not occupied by the enclosure are lined with sound-absorbing material.

## Patentansprüche

1. Tonanlage für einen Fernsehempfänger mit integriertem Tieftonlautsprecher mit großen Abmessungen, ferner mit Hochton-Lautsprechern, die an der Front des Fernsehempfängers angebracht sind, gekennzeichnet durch wenigstens einen Lautsprecher (4) zur Wiedergabe niedriger Frequenzen, der im hinteren Teil des Gehäuses des Fernsehgeräts angebracht ist und mit einer von dem Gehäuse verschiedenen Schallwand (6) verbunden ist und zu einer Seite (10) der Front des Fernsehgeräts mündet, wobei der vordere Teil dieser Schallwand viel schmaler als ihr hinterer Teil ist.

2. Tonanlage nach Anspruch 1 für eine stereophone Tonwiedergabe, gekennzeichnet durch eine zweite Schallwand, die mit einem Lautsprecher für niedrige Frequenzen verbunden ist und symmetrisch bezüglich der ersten Schallwand angebracht ist.

3. Tonanlage nach Anspruch 1 oder 2, dadurch gekennzeichnet, daß die Schallwand mit einem schallabsorbierenden Material (14) versehen ist.

4. Tonanlage nach einem der vorhergehenden Ansprüche, dadurch gekennzeichnet, daß die rückwärtige Verkleidung (9) und die Innenflächen des Gehäuses, die nicht durch die Schallwand besetzt sind, mit einem schallabsorbierenden Material versehen sind.
